# EUROPÄISCHE PATENTSCHRIFT

(11) **EP 1 790 536 B1**
(45) Veröffentlichungstag und Bekanntmachung des Hinweises auf die Patenterteilung: **20.01.2010**
(21) Anmeldenummer: 06023767.4
(22) Anmeldetag: 15.11.2006
(51) Int. Cl.: B60R 21/20

(54) **Fahrzeuglenkrad mit Airbag und gedämpftem Hupenschalter**
Steering wheel with air-bag module and a vibration damping horn switch
Module de sac gonflable comprenant un générateur de gaz suspendu par amortisseur de vibrations

(30) Priorität: 29.11.2005 DE 202005018665 U
(43) Veröffentlichungstag der Anmeldung: 30.05.2007
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Mehnert, Bernhard

(56) Entgegenhaltungen:
- EP-A1- 1 415 870
- EP-A1- 1 426 248
- EP-A2- 1 020 332
- DE-C1- 4 430 588
- US-A- 5 228 362
- US-A1- 2002 109 337

## Beschreibung

Die Erfindung betrifft ein Fahrzeuglenkrad nach dem Oberbegriff des Anspruchs 1.

Eine im Lenkrad integrierte bewegliche Hupenbetätigungseinheit ist beispielsweise ein sogenanntes Floating-Horn-Gassackmodul, bei dem das gesamte Gassackmodul zur Hupbetätigung in Richtung Lenkradnabe gedrückt wird. Eine andere Art der Hupenbetätigungseinheit ist eine Abdeckkappe, insbesondere eine Gassackmodulabdeckkappe, die zur Lenkradnabe bzw. zum Rest des Gassackmoduls beweglich gelagert ist, um durch Verschiebung oder durch eine Kippbewegung einen Hupenkontakt zu schließen.

Diese Hupenbetätigungseinheiten sind in Richtung entgegen der Lenkradnabe federnd angestellt, um die Rückstellbewegung der Hupenbetätigungseinheit sowie eine Ausgangsstellung derselben sicherzustellen.

Im Fahrbetrieb kann es bei schlechtem Straßenzustand zu erheblichen Stößen auf die Hupenbetätigungseinheit kommen, weshalb die Federelemente so stark ausgeführt sein müssen, daß es keinesfalls zum Durchschlagen, d.h. einer durch einen Stoß verursachten Hupenbetätigung kommen kann.

Die gattungsbildende US 2002/0109337 A1, die US 5,228,362 A, die EP 1 426 248 A1 und die EP 1 415 870 A1 zeigen jeweils ein verschiebbares Gassackmodul, das von Rückstellfedern in die Ausgangsstellung beaufschlagt wird.

Die EP 1 020 332 A2 beschreibt ein Gassackmodul, das sich in Richtung der Lenkradnabe entgegen der Kraft einer Spiralfeder bewegen kann, wobei eine Hupe betätigt wird. Ein Gasgenerator ist mittels eines Dämpfungselementes an einem unbeweglichen Teil angebracht.

Aus der DE 44 30 588 C1 ist ein Gassackmodul mit einem Stoßdämpfer bekannt. Der Stoßdämpfer erlaubt eine Bewegung des Gassackmoduls weg vom Fahrzeuginsassen, weshalb die Verletzungsgefahr verringert wird. Eine modulintegrierte Hupe ist nicht gezeigt.

Die Erfindung schafft ein Fahrzeuglenkrad, bei dem die Hupenbetätigung mit einer geringeren Kraft erfolgen kann, wie es von den Fahrzeuglenkern immer häufiger gewünscht wird.

Dies wird bei einem Fahrzeuglenkrad der eingangs genannten Art mit den Merkmalen des Anspruchs 1 erreicht. . Durch den als separates, zusätzliches Teil ausgeführten Stoßdämpfer werden die Ausschläge der Hupenbetätigungseinheit geringer, somit können die Rückstellfedern schwächer ausgelegt werden. Trotzdem besteht keine Gefahr einer durch eine schlechte Fahrbahn angeregten Hupenbetätigung.

Die Hupenbetätigungseinheit ist gemäß der bevorzugten Ausführungsform ein Gassackmodul, das aufgrund seiner großen Masse besonders starke Rückstellfedern aufwies.

Das Gassackmodul ist beweglich an einer Zwischenplatte oder an einem Lenkradkörper (insbesondere Lenkradskelett) angebracht.

Falls eine sogenannte Zwischen- oder Montageplatte vorgesehen ist, ist diese lenkradkörperfest angebracht, zum Beispiel mittels einer Schnappverbindung.

Der Stoßdämpfer sollte zwischen der Hupenbetätigungseinheit und der Zwischenplatte bzw. dem Lenkradkörper angeordnet sein, damit eine unmittelbare Kraftübertragung in den Stoßdämpfer erfolgen kann.

Gemäß der bevorzugten Ausführungsform wird als Stoßdämpfer ein Flüssigkeitsstoßdämpfer, insbesondere ein Öldruckstoßdämpfer verwendet. Solche Öldruckstoßdämpfer können inzwischen sehr klein gebaut werden, sie sind kostengünstig in der Anschaffung und sehr zuverlässig über eine hohe Lebensdauer.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Teilschnitt durch ein erfindungsgemäßes Fahrzeuglenkrad gemäß einer ersten Ausführungsform,
- Figur 2 einen Querschnitt durch ein erfindungsgemäßes Lenkrad gemäß einer zweiten Ausführungsform und
- Figur 3 einen Teilschnitt durch ein erfindungsgemäßes Lenkrad gemäß einer dritten Ausführungsform.

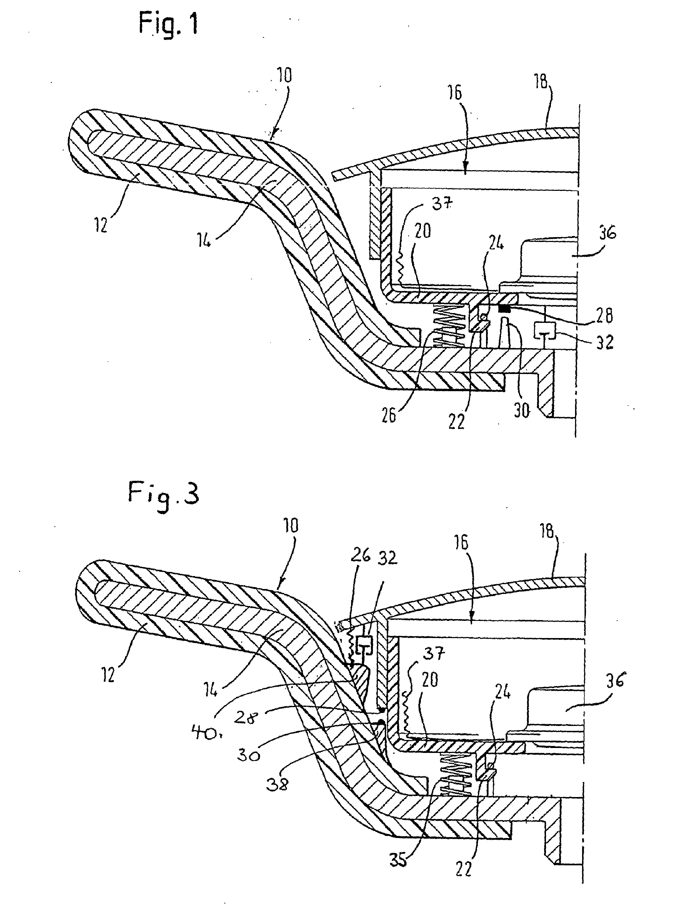

In Figur 1 ist ein Fahrzeuglenkrad 10 dargestellt, mit einer äußeren Verkleidung 12 aus Kunststoff und einem Lenkradkörper 14 (auch Lenkradskelett genannt) aus Metall. Auf einem zentralen Nabenabschnitt des Lenkradkörpers 14 ist ein Gassackmodul 16 angeordnet. Das Gassackmodul 16 umfaßt eine fahrerseitige Abdeckkappe 18 und einen lenkradseitig angeordneten Gasgeneratorträger 20, der in bekannter Weise im Bereich einer Seitenwand mit der Abdeckkappe 18 verbunden ist. Am Boden des Generatorträgers 20 sind mehrere Rasthaken 22 angeformt, die in ein entsprechendes Widerlager 24 am Lenkradkörper 14 einschnappen und so den Gasgeneratorträger 20 bzw. das gesamte Gassackmodul 16 am Lenkradkörper 14 festlegen.

Zwischen dem Boden des Generatorträgers 20 und dem Lenkradkörper 14 sind ferner ein oder mehrere elastische Rückstellelemente 26, beispielsweise Spiralfedern, angeordnet, mit denen ein Abstand zwischen dem Lenkradkörper 14 und dem Boden des Generatorträgers 20 in der Ausgangsstellung festgelegt wird. Darüber hinaus ist am Boden des Generatorträgers 20 ein elektrischer Kontakt 28 vorgesehen, welcher mit einem gegenüberliegenden, am Lenkradkörper 14 angeordneten Gegenkontakt 30, beispielsweise einem Kontaktniet, zusammenwirkt.

Ferner ist zwischen dem Boden des Generatorträgers 20 und dem Lenkradkörper 14 ein Stoßdämpfer 32, hier ein Flüssigkeitsstoßdämpfer, insbesondere Öldruckstoßdämpfer, befestigt. Der Stoßdämpfer 32 ist unmittelbar an einem Ende mit dem Lenkradkörper 14 und am anderen Ende mit dem Gassackmodul, genauer dem Generatorträger 20, verbunden.

In der Ruhe- oder Ausgangsposition, die in Figur 1 gezeigt ist, drückt das Rückstellelement 26 den Rasthaken 22 gegen das Widerlager 24, so daß das elektrische Kontaktelement 28 von dem Gegenkontakt 30 definiert beabstandet ist.

Bei der vorliegenden Ausführungsform des Gassackmoduls 16 handelt es um ein sogenanntes Floating-Horn-Modul, bei dem das gesamte Gassackmodul 16 in Richtung Lenkradnabe gedrückt wird, um die Kontakte 28, 30 zu schließen. Vorwiegend bildet deshalb das gesamte Modul die sogenannte Hupenbetätigungseinheit, die zur Hupenbetätigung bewegt wird.

Durch einen Druck auf die Abdeckkappe 18 in Richtung zur Lenkradnabe wird das Rückstellelement 26 zusammengedrückt, und die Kontakte 28, 30 werden geschlossen. Der Stoßdämpfer 32 wirkt hier der Bewegung kaum entgegen.

Die Wirkung des Stoßdämpfers 32 ist so ausgelegt, daß der Stoßdämpfer abrupte, kurze und harte Schläge dämpft, die durch Fahrbahnunebenheiten, z.B. Schlaglöcher, auf das Lenkrad 10 und das Gassackmodul 16 ausgeübt werden. Trotz weichem Rückstellelement 26 verhindert in diesem Fall der Stoßdämpfer 32 ein Durchschlagen des Moduls bis zum Schließen der Kontakte 28, 30.

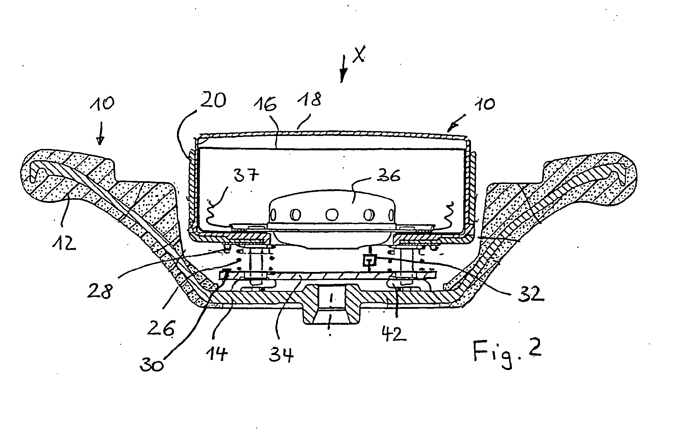

Die Ausführungsform nach Figur 2 entspricht im wesentlichen der in Figur 1 gezeigten, so daß im folgenden nur auf die Unterschiede eingegangen werden muß. Funktionsgleiche Teile erhalten auch dasselbe Bezugszeichen.

Bei der Ausführungsform nach Figur 2 handelt es sich auch um ein Floating-Horn-Modul. Dieses ist jedoch nicht direkt am Lenkradkörper 14 befestigt, sondern an einer Zwischenplatte 34, die z.B. durch einen Rastmechanismus mit dem Lenkradkörper 14 so starr verbunden ist, daß im wesentlichen keine Relativbewegungen zwischen Zwischenplatte 34 und Lenkradkörper 14 auftreten. Der Rastmechanismus ist schematisch gezeigt und mit dem Bezugszeichen 42 versehen.

Vorliegend ist der Gegenkontakt 30 an der Zwischenplatte 34 angeordnet, und der Stoßdämpfer 32 liegt zwischen dem Generatorträger 20 und der Zwischenplatte 34.

Bei der Ausführungsform nach Figur 3 handelt es sich um kein Floating-Horn-Modul, sondern um ein Modul, bei dem die Abdeckkappe 18 relativ zum Generatorträger 20 zur Hupenbetätigung verschiebbar ist. Der Rest des Gassackmoduls 16, d.h. das Modul mit Ausnahme der Abdeckkappe 18, bleibt fest mit dem Lenkradkörper 14 verbunden. Eine Feder 35, die zwischen dem Lenkradkörper 14 und dem Gasgeneratorträger 20 angeordnet ist, dient bei der Ausführungsform nach Figur 3 nur der Sicherung der Rastverbindung. Kontaktelement 28 und Gegenkontakt 30 sind an der Abdeckkappe 18 bzw. an einem Vorsprung 38 des Lenkradkörpers 14 vorgesehen. Der Stoßdämpfer 32 liegt entsprechend ebenfalls zwischen der Abdeckkappe 18 und einem Vorsprung 40 des Lenkradkörpers 14, ebenso wie das elastische Rückstellelement 26.

Bei sämtlichen Ausführungsformen ist im übrigen der Gasgenerator mit dem Bezugszeichen 36 und der Gassack mit dem Bezugszeichen 37 versehen.

## Patentansprüche

1. Fahrzeuglenkrad,
mit einer beweglichen Hupenbetätigungseinheit (16; 18), die in Richtung entgegen der Lenkradnabe mittels wenigstens eines federnden Rückstellelements (26) federnd angestellt ist, um die Rückstellbewegung der Hupenbetätigungseinheit (16; 18) sowie eine Ausgangsstellung der Hupenbetätigungseinheit (16; 18) sicherzustellen, und
**gekennzeichnet durch**
einen daran angebrachten, als separates, zusätzliches Teil ausgebildeten Stoßdämpfer (32), der die Bewegung der Hupenbetätigungseinheit (16; 18) dämpft.

2. Fahrzeuglenkrad nach Anspruch 1, **dadurch gekennzeichnet, daß** die Hupenbetätigungseinheit (16; 18) ein Gassackmodul (16) oder eine relativ zum Rest des Gassackmoduls (16) bewegliche Abdeckkappe (18) ist.

3. Fahrzeuglenkrad nach Anspruch 1 oder 2, **dadurch gekennzeichnet, daß** ein Gassackmodul (16) beweglich an einer Zwischenplatte (34) oder einem Lenkradkörper (14) angebracht ist.

4. Fahrzeuglenkrad nach Anspruch 3, **dadurch gekennzeichnet, daß** die Zwischenplatte (34) fest am Lenkradkörper (14) angebracht ist.

5. Fahrzeuglenkrad nacht einem der Ansprüche 3 und 4, **dadurch gekennzeichnet, daß** der Stoßdämpfer (32) zwischen der Hupenbetätigungseinheit (16; 18) und dem Lenkradkörper (14) bzw. der Zwischenplatte (34) angeordnet ist.

6. Fahrzeuglenkrad nach einem der vorhergehenden Ansprüche, **dadurch gekennzeichnet, daß** der Stoßdämpfer (32) ein Flüssigkeitsstoßdämpfer, insbesondere Öldruckstoßdämpfer, ist.

## Claims

1. A vehicle steering wheel,
having a movable horn actuating unit (16; 18), which is spring-loaded in the direction contrary to the steering wheel hub by means of at least one resilient restoring element (26), in order to ensure the restoring movement of the horn actuating unit (16; 18) and a starting position of the horn actuating unit (16; 18), and
**characterised by**
a shock absorber (32) attached thereto and taking the form of a separate, additional part, which dampens the motion of the horn actuating unit (16; 18).

2. A vehicle steering wheel according to claim 1, **characterised in that** the horn actuating unit (16; 18) is an airbag module (16) or a covering cap (18) movable relative to the rest of the airbag module (16).

3. A vehicle steering wheel according to claim 1 or claim 2, **characterised in that** an airbag module (16) is attached movably to an intermediate plate (34) or a steering wheel body (14).

4. A vehicle steering wheel according to claim 3, **characterised in that** the intermediate plate (34) is attached firmly to the steering wheel body (14).

5. A vehicle steering wheel according to either one of claims 3 and 4, **characterised in that** the shock absorber (32) is arranged between the horn actuating unit (16; 18) and the steering wheel body (14) or the intermediate plate (34).

6. A vehicle steering wheel according to any one of the preceding claims, **characterised in that** the shock absorber (32) is a hydraulic shock absorber, in particular an oil-filled shock absorber.

## Revendications

1. Volant de véhicule,
avec une unité de commande mobile (16 ; 18) de l'avertisseur sonore, qui est disposée avec un effet de ressort dans le sens opposé au moyeu du volant au moyen d'au moins un élément de rappel à ressort (26) pour assurer le mouvement de retour de l'unité de commande (16 ; 18) de l'avertisseur sonore, ainsi qu'une position de départ de l'unité de commande (16 ; 18) de l'avertisseur sonore, et
**caractérisé par**
un amortisseur (32) agencé sur celui-ci, réalisé sous forme de pièce supplémentaire, séparée, qui amortit le mouvement de l'unité de commande (16 ; 18) de l'avertisseur sonore.

2. Volant de véhicule selon la revendication 1, **caractérisé en ce que** l'unité de commande (16 ; 18) de l'avertisseur sonore est un module d'airbag (16) ou un couvercle de protection (18) mobile par rapport au reste de l'airbag (16).

3. Volant de véhicule selon la revendication 1 ou 2, **caractérisé en ce qu'**un airbag (16) est disposé de manière mobile sur une plaque intermédiaire (34) ou un corps du volant (14).

4. Volant de véhicule selon la revendication 3, **caractérisé en ce que** la plaque intermédiaire (34) est agencée de manière fixe au corps du volant (14).

5. Volant de véhicule selon l'une quelconque des revendications 3 et 4, **caractérisé en ce que** l'amortisseur (32) est disposé entre l'unité de commande (16 ; 18) de l'avertisseur sonore et le corps (14) du volant ou, selon le cas, la plaque intermédiaire (34).

6. Volant de véhicule selon l'une quelconque des revendications précédentes, **caractérisé en ce que** l'amortisseur (32) est un amortisseur à liquide, en particulier un amortisseur hydraulique.
